# EUROPEAN PATENT SPECIFICATION

(11) **EP 0 529 958 B1**
(45) Date of publication and mention of the grant of the patent: **11.10.1995**
(21) Application number: 92307639.2
(22) Date of filing: 21.08.1992
(51) Int. Cl.: B60S 9/12, B60G 17/052

(54) **Improvements relating to fluid suspended freight-carrying vehicles**
Verbesserungen an hydraulischen Aufhängungen von Lastkraftwagen
Perfectionnements relatifs aux véhicules de transport de marchandises à suspension hydraulique

(30) Priority: 22.08.1991 GB 9118162
(43) Date of publication of application: 03.03.1993
(73) Proprietor: ROR ROCKWELL LIMITED, Llay Nr. Wrexham Clwyd LL12 0PB (GB)
(72) Inventor: Dixon, Alan Geoffrey, Doddleston, Chester CH4 9NU (GB)
(74) Representative: Stonehouse, Sidney William

(56) References cited:
- AT-B- 390 589
- AU-B- 45 416
- DE-C- 123 360
- FR-A- 2 239 103
- FR-A- 2 529 838
- PATENT ABSTRACTS OF JAPAN vol. 11, no. 86 (M-572)(2533) 17 March 1987 & JP-A-61 241 210 (HINO MOTORS) 27 October 1986
- PATENT ABSTRACTS OF JAPAN vol. 3, no. 144 (M-82)28 November 1979 & JP-A-54 120 351 (TOKYO SHIBAURA DENKI) 18 September 1979

## Description

This invention relates to freight-carrying vehicles fitted with fluid suspension, more particularly, though not exclusively, compressible fluid, for example air, suspension.

There is a problem when such vehicles are loaded/unloaded, for example by a fork lift truck, in that the weight of the lift truck going onto and leaving the vehicle causes substantial deflection of the suspension whereby tipping over of the lift truck may occur as the suspension reacts the imposition/removal of the weight of the lift truck and its load.

A primary aim of this invention is to provide a stable platform height for a fluid suspended freight-carrying vehicle during loading/unloading operations. However, its use is not restricted to such applications.

According to a first aspect the present invention consists in platform height stabilising apparatus for a fluid suspended freight-carrying vehicle characterised by at least one strut of variable length adapted to be arranged to act between a load supporting platform and an axle of the vehicle or between the platform and the ground, means to vary the length of the strut, locking means to lock the strut in a supporting position between the platform and the axle/ground, a lost motion connection associated with the strut whereby a variation of the load on the platform of the vehicle is enabled to cause/allow movement of the platform under the influence of the fluid suspension, and valve means in circuit with the fluid suspension and a source of fluid pressure, the arrangement being such that the valve means is actuated by the lost motion connection to cause inflation/deflation of the suspension whereby the suspension is caused to respond to the loading on the platform.

According to a second aspect this invention comprises a freight-carrying vehicle fitted with fluid suspension and characterised in that it has platform height stabilising apparatus in accordance with the first aspect of the invention as set out herein.

The use of the platform height stabilising apparatus in accordance with the invention results in the variable length strut, or struts, being called on to react the transient loads arising during loading/unloading of the vehicle to which the apparatus is applied whilst the base load of the vehicle and its cargo continue to be reacted by the fluid suspension.

When loading/unloading is completed the strut is unlocked and its length is reduced to restore normal running clearances. The platform height may, for example, have been raised or lowered for alignment with a loading dock. Because the base load is always supported by the fluid suspension the restoration of the platform height to its normal ride height after loading/unloading is accomplished without a sudden collapse of the suspension on taking up a load (that is, from an unladen to a laden condition) or a sudden rapid expansion following removal of a load (that is, from a laden to an unladen condition).

An embodiment of the invention will now be described by way of example only with reference to the accompanying drawings in which:
Figure 1 is a side elevation showing an air suspension unit for a trailer (two are required to make up a complete air suspension for one axle) together with a strut of variable length;
Figure 2 is a fragmentary view showing an alternative strut and retracting mechanism therefor, a locking mechanism being omitted for clarity;
Figure 3 is a fragmentary view, as Figure 2, showing a locking mechanism and omitting the valve mechanism of Figure 2 for clarity;
Figure 4 is a fragmentary plan view on the top of the strut of Figure 2 showing the arrangement of a pulley, and
Figure 5 is a view on arrow A of Figure 3.

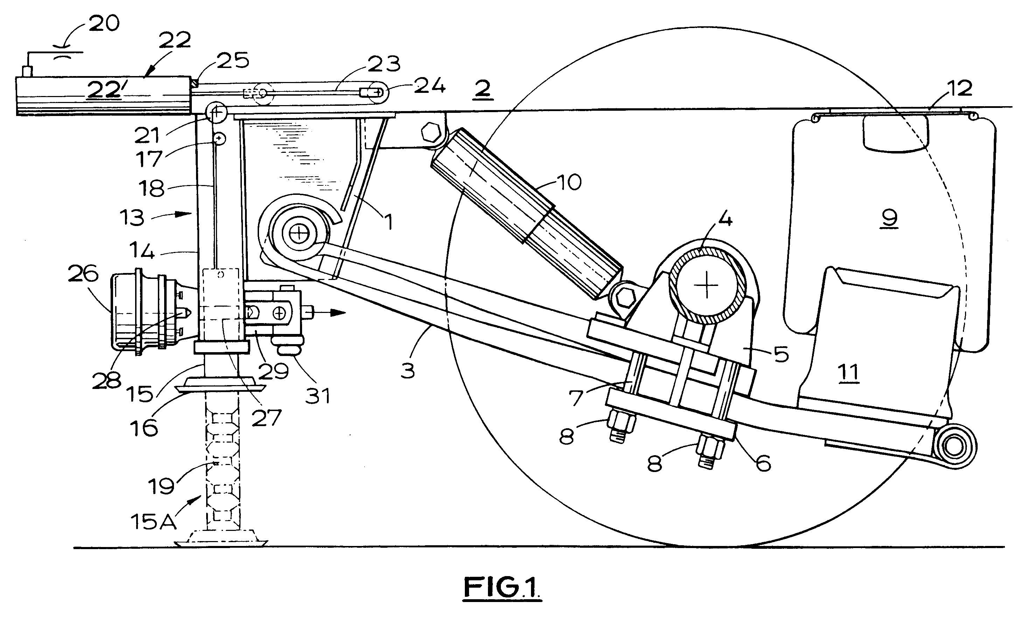

Referring to Figure 1, a hanger bracket 1, of generally U-shape when viewed from above, is secured to and depends from a chassis member 2 supporting a load-carrying platform of a trailer (not shown). A near side of the bracket 1 is omitted from the drawing for clarity. A fore and aft extending member in the form of a 2-leaf spring 3 has a front end pivotally connected to the lower end of the bracket 1, between the sides thereof. An axle 4, shown in section, has a spring seat 5 secured to it, as by welding. The spring seat 5, axle 4, and a bottom plate 6 are clamped to the spring 3 by U-bolts 7 and nuts 8. An air spring 9 has a piston 11 which is secured, as by bolts, to a rear end of the spring 3 and a mounting plate 12 which is secured to the chassis member 2. A damper 10 is pivotally mounted between the chassis member 2 and the spring seat 5.

Carried by the chassis member 2 is a downwardly extending variable length strut 13 which comprises an outer tube 14 in which an inner tube 15 is slidable but not rotatable. The inner tube 15 has a ground engaging foot 16 at its lower end and an anchorage 17 at its upper end for one end of a cable 18, or like flexible member. The inner tube 15, shown in an extended position indicated in broken lines at 15A, has a series of through holes 19, each having a tapered entry and exit. These holes 19 will usually be situated towards the top of the inner tube 15 but are shown displaced in Figure 1 for illustrative purposes.

The outer tube 14 of the strut 13 is secured, as by welding, to the bracket 1 or to a suitable point on the chassis member 2 and carries a rotatably mounted pulley 21 at its upper end. A pneumatic jack 22, comprising a cylinder 22' with piston and piston rod 23 reciprocable therein, is mounted on the chassis member 2. The piston rod 23 carries a rotatably mounted pulley 24 at its free end. The cable 18 is secured at one end to the anchorage 17 on the inner tube 15, passes around the pulleys 21, 24 and is secured at its other end at an anchorage 25 on the cylinder 22'.

An actuator 26, for example a conventional pneumatic brake actuator, having a diaphragm operating a rod, and a return spring section, not shown, is mounted on one side of the outer tube 14 of the strut 13 such that its rod is aligned with a through hole 27 in that tube 14. The rod of the actuator 26 terminates in a locking pin 28 having a tapered nose. Operation of the actuator reciprocates the locking pin 28 in the hole 27 through a registering hole 19 in the inner tube 15. The locking pin 28 is a loose fit in the holes 27, 19 so as to permit limited relative vertical movement between the outer and inner tubes 14, 15. When the locking pin 28 is inserted the inner tube 15 is locked in the outer tube 14, that is to say, the inner tube 15 is prevented from moving vertically in outer tube 14 beyond the limits defined by the loose fit of the locking pin 28. When the locking pin 28 is withdrawn the inner tube 15 can slide freely in the outer tube 14.

Mounted on the outer tube 14 opposite the actuator 26 is a receiver 29 which is the control lever for a quick reaction suspension levelling valve 31 pneumatically connected to the air springs 9 of the trailer. The locking pin 28, when inserted, extends into the receiver 29 such that if the pin is tilted in the holes 27, 19 it will tilt the receiver 29 and cause operation of the levelling valve 31 either to admit pressure air to or to allow deflation of, the air springs 9.

The operation of this apparatus fitted to the trailer will now be described. The trailer is manoeuvred, for example, into a loading bay, the height control system is disabled or by-passed and the air springs 9 are inflated/deflated to level the trailer platform with the deck of the loading bay. The inner tube 15 of the strut 13 is locked by the locking pin 28 in a retracted position in the outer tube 14, and the piston rod 23 of the pneumatic jack 22 is in an extended position. A valve, not shown, is operated to release pressure air from the cylinder 22′ to exhaust through a throttled flow restrictor 20 so as to maintain cable tension and to admit pressure air to the diaphragm of the actuator 26. This causes the locking pin 28 to be withdrawn and the inner tube 15 falls under gravity, retracting the piston rod 23 into the cylinder 22′ of the pneumatic jack by the action of the cable 18 and pulleys 21, 24. The foot 16 engages the ground. The valve which admitted pressure air to the diaphragm of the actuator 26 is then operated to exhaust that pressure air and the locking pin 28 is extended by the action of the return spring section of the actuator 26. The tapered nose of the locking pin 28 and the tapered entry to the holes 19 enable the locking pin to be driven readily through the hole 27 and a registering one of the holes 19. Depending upon the position of the nearest registering hole 19, the inner tube 15 may be lifted slightly by the locking pin 28 on its passage through the outer tube 14 to enter the receiver 29. If this occurs the weight of the inner tube 15, with or without assistance of an auxiliary spring (not shown), will tilt the locking pin 28 so that it tilts the receiver 29, which operates the valve 31 to release pressure air from the air springs until the foot 16 re-engages with the ground.

If, say, a fork lift truck is now driven onto the trailer platform the air springs 9 will be compressed and the platform will drop to the extent permitted by the lost motion connection provided by the locking pin 28 in the holes 27, 19. Locking pin 28 will be tilted and will cause admission of pressure air to the air springs to raise the platform, thereby re-centralising the locking pin 28, whereupon operation of the valve 31 ceases. Similarly, when the fork lift truck leaves the trailer platform the latter will be raised by the air springs because of the decreased load on them. The locking pin 28 is tilted in the opposite direction to operate the valve 31 to release pressure air from the air springs until the platform height reverts. Thus the suspension is caused to respond to the loading on the platform and the locking pin 28 and the strut 13 react just the transient loads.

When the loading/unloading operation is completed pressure air is admitted to the diaphragm of the actuator 26, withdrawing the locking pin 28, and to the full area side of the cylinder 22′ of the pneumatic jack 22 by way of the throttled orifice 20, thereby causing the piston rod 23 to extend and retract the inner tube 15 of the strut. When the inner tube 15 is retracted sensing means (not shown) cause the pressure air to be released from the diaphragm of the actuator 26 and the latter's return spring section causes the locking pin 28 to be extended through the outer and inner tubes 14, 15 to lock the inner tube in a retracted position.

It will be appreciated that, where space permits, the variable length strut 13 could, for example, be fitted between the chassis member 2 and the axle 4 or the spring seat 5 so as to operate in the same way as has been described.

In an alternative application for the apparatus of the present invention the strut, or struts, 13 could replace conventional landing legs on a trailer, for example in road/rail operation.

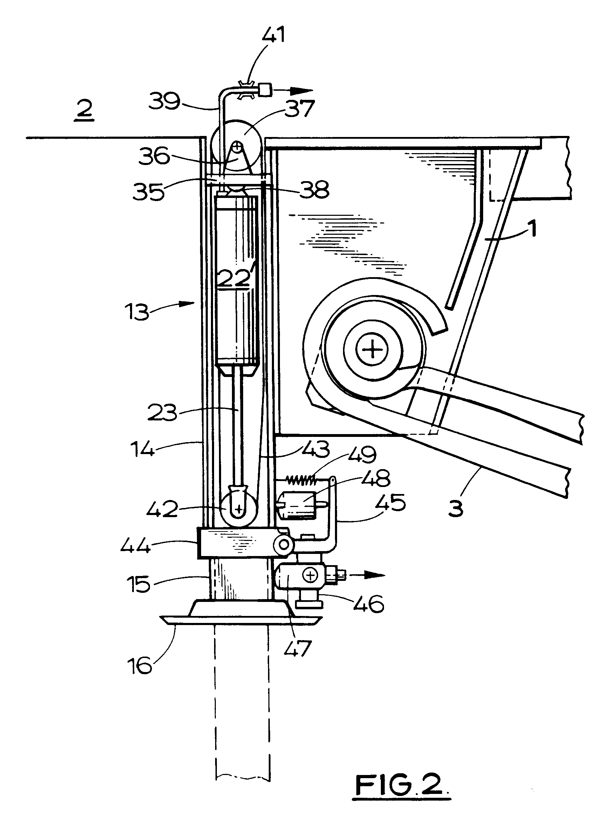

Referring now to Figure 2, parts corresponding to those of the apparatus shown in Figure 1 are indicated by corresponding reference numerals. Thus there is a hanger bracket 1 (again shown with one side omitted), chassis member 2 and 2-leaf spring 3, strut 13 and its outer and inner tubes 14, 15 respectively and foot 16. The tubes of the strut 13 are of non-round, for example square, section so that the inner tube 15 slides, and is guided, in the outer tube 14. As before, the outer tube 14 is secured to the hanger bracket 1, or the chassis member 2, as by welding. The inner tube 15 is shown in its retracted position in the outer tube 14 and may be secured therein by, for example, a retractable pin, not shown, passing through registering holes, not shown, in the two tubes.

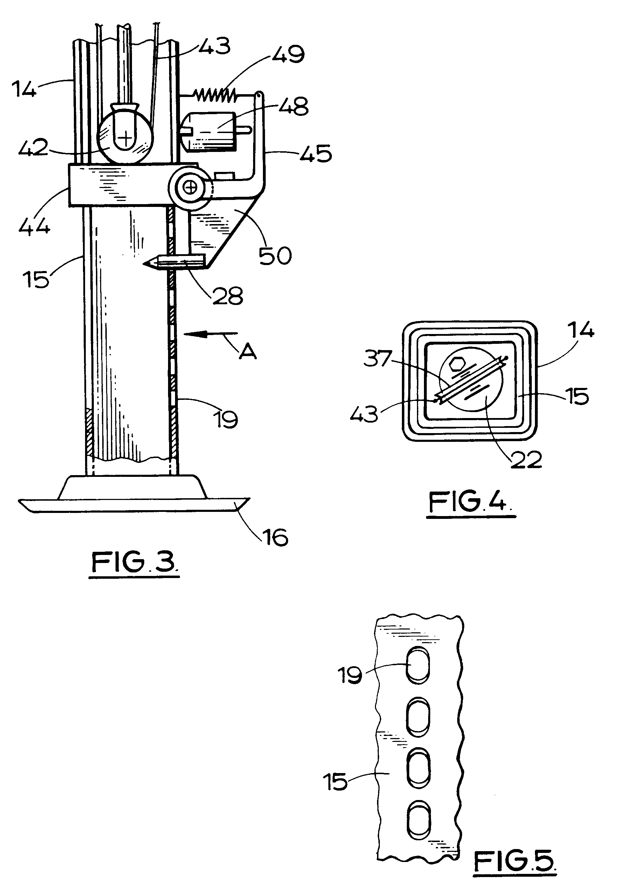

Adjacent to the top of the outer tube 14 is a transverse plate 35 which carries on an upper surface a mounting 36 for a rotatable pulley 37. The pulley 37 is disposed diagonally of the tubes 14, 15, as seen in Figure 4. A pivotal mounting 38 for the cylinder 22′ of a pneumatic jack 22 (preferably of circular section externally) is provided on a lower surface of the plate 35, the pneumatic jack 22 being housed in and extending along the outer tube 14 from the pivotal mounting 38. An air supply/exhaust pipe 39 is connected to the full area end of cylinder 22′ and incorporates a restrictor 41. The free end of a piston rod 23 of the pneumatic jack 22 operating in the cylinder 22′ rotatably carries a pulley 42. A cable 43, or like flexible member, has an end connected to the top of the inner tube 15, then passes around the pulleys 37 and 42 and its other end is secured to the lower end of the cylinder 22′.

A reinforcing band 44 at the bottom of the outer tube 14 of the strut has a pivotal mounting for an L-shaped lever 45. The lever 45 carries a quick reaction suspension levelling valve 46 and its operating lever 47. An auxiliary air cylinder 48 is carried by the outer tube 14 and acts between that tube and the upright limb of the lever 45. A tension spring 49 is connected between the upright limb of the lever 45 and the outer tube 14 to bias the lever 45 in an anti-clockwise direction (as viewed in Figure 2).

Assuming the inner tube 15 is in its retracted position in the outer tube 14, defined by abutment of its upper end against the lower surface of the plate 35, the retractable pin, if applied, holding the inner tube retracted is removed to allow the strut 13 to be extended.

A valve (not shown) is operated to open the pipe 39 to atmosphere and the weight of the inner tube 15 and foot 16 causes closure of the piston rod 23 into the cylinder 22′ due to the operation of the cable 43 and the pulleys 37, 42, the rate of closure being governed by the restrictor 41.

When the foot 16 of the strut 13 contacts the ground a proximity switch or manual selector (not shown) closes the valve, trapping air in the cylinder 22′. The auxiliary cylinder 48 is pressurised to cause clockwise (as drawn) rotation of the L-shaped lever 45 so that the operating lever 47 bears against the outer surface of the inner tube 15, and a loose fit locking pin is inserted, as in the Figure 1 construction.

If the load on the vehicle platform changes whilst the strut is extended the inner tube 15 will move up or down within limits in the outer tube 14. Such movement will cause rotation of the lever 47 and consequent operation of the suspension levelling valve 46 to cause the air suspension to respond, whereupon the inner tube 15 reverts to its original position.

When it is desired to retract the inner tube 15 the locking pin is withdrawn and the air cylinder 48 is vented. The tension spring 49 connected between the outer tube 14 and the L-shaped lever 45 causes rotation of the latter in an anti-clockwise direction (as drawn) so as to de-activate the valve 46. The valve for the cylinder 22′ of the pneumatic jack 22 is operated to admit air and cause extension of the piston rod 23. When retraction is completed the retractable pin may be inserted to hold the inner tube 15 and the valve operated to cut off the supply of air to the cylinder 22′. The rate of extension of the piston rod 23 is controlled by the restrictor 41.

Referring now to Figures 3 and 5, the L-shaped lever 45 of Figure 2 may have an additional, depending, extension 50 and the inner tube 15 of the strut may have a series of holes 19 in the form of slots, Figure 5, along its length so as to be in vertical alignment with a locking pin 28 carried by the extension 50. By this means, when the inner tube 15 is lowered, the locking pin 28 on the extension 50 can enter an adjacent slot 19 (with which it makes a lost motion connection as the slots are longer than the vertical dimension of the locking pin 28) whereby the strut is enabled to carry and react transient loads. It will be apparent that the extension 50 and the valve 45 may be mounted on opposite sides of the outer tube 14 if desired.

It will be appreciated that the apparatus of Figure 1 may be modified, if desired, to incorporate a feature or features of the alternative strut and retracting and locking mechanisms of Figure 2 or Figure 3, and vice versa.

## Claims

1. Platform height stabilising apparatus for a fluid suspended freight-carrying vehicle characterised by at least one strut (13) of variable length adapted to be arranged to act between a load supporting platform and an axle of the vehicle or between the platform and the ground, means (22, 18, 43) to vary the length of the strut, locking means (26, 28, 27, 19, 48) to lock the strut in a supporting position between the platform and the axle/ground a lost motion connection (28, 19) associated with the strut whereby a variation of the load on the platform is enabled to cause/allow movement of the platform under the influence of the fluid suspension, and valve means (31, 46) in circuit with the fluid suspension and a source of fluid pressure, the arrangement being such that the valve means is actuated by the lost motion connection to cause inflation/deflation of the suspension whereby the suspension is caused to respond to the loading on the platform.

2. Apparatus as claimed in claim 1 characterised in that the strut (13) comprises a first tube (14) and a second tube (15) which is slidable in but not rotatable in the first tube.

3. Apparatus as claimed in claim 2 characterised in that the second tube (15) has along its length a plurality of aligned holes (19), an actuator (26, 48) is carried by the first tube (14), a locking pin (28) is operably connected to the actuator (26, 48) and aligned with the line of holes (19), the holes (19) and locking pin (28) being dimensioned so that when the locking pin is engaged in any one of the holes, there is clearance between the locking pin and hole longitudinally of the strut, and the actuator is caused to be operated whereby the locking pin is inserted into a registering one of the holes whereby a lost motion connection is made between the first and second tubes limiting their relative movement longitudinally of the strut.

4. Apparatus as claimed in claim 3 characterised in that pneumatic valve means (31, 46) is carried by the first tube (14) so as to be operable in response to movement in the lost motion connection (28, 19) to cause inflation/deflation of the suspension of the vehicle, whereby the suspension is caused to respond to the loading on its platform when the strut (13) is locked in a supporting position between the vehicle and an axle or the ground.

5. Apparatus as claimed in claim 3 or claim 4 characterised in that there is a through hole (27) in and located towards a lower end of the first tube (14) and with which the holes (19) of the second tube (15) are respectively registrable, and the locking pin (28) inserts into the through hole (27) and a registering one of the holes (19) to provide the lost motion connection.

6. Apparatus as claimed in claim 5 characterised in that the through hole (27) is dimensioned to receive the locking pin (28) with clearance therebetween longitudinally at the strut (13) so that the locking pin (28) can tilt longitudinally of the strut when relative vertical movement occurs between the first tube (14) and the second tube (15).

7. Apparatus as claimed in claim 3 or claim 4 characterised in that a lever (45) is pivotally carried by the first tube (14), the actuator (48) acts between the first tube (14) and the lever (45), biassing means (49) biases the lever (45) to engage the actuator (48) and the locking pin (28) is carried by the lever whereby operation of the actuator causes pivoting of the lever to insert the locking pin into a registering one of the holes (19) in the second tube (15).

8. Apparatus as claimed in claim 7 characterised in that a valve (46) in circuit with the fluid suspension and the source of the fluid pressure is carried by the lever (45) and is engageable with the second tube (15) so as to be operable thereby responsive to movement in the lost motion connection and cause/allow movement of the platform under the influence of the fluid suspension.

9. Apparatus as claimed in any one of preceding claims 2 to 8 characterised in that the means to vary the length of the strut comprises a pneumatic actuator (22) operably connected between the first and second tubes (14, 15) so as selectively to cause the second tube to be retracted into the first tube and to allow the second tube to extend from the first tube.

10. Apparatus as claimed in claim 9 characterised in that the pneumatic actuator (22) is a pneumatic jack having a cylinder (22′), a piston and a piston rod (23), a first pulley (24, 42) is rotatably carried by a free end of the piston rod (23), a second pulley (21, 37) is rotatably carried at the top of the first tube (14) and a flexible connecting link (18, 43) is adapted to be connected at one end to an anchorage which in use of the apparatus is fixed relative to the vehicle, is passed around the first and second pulleys and has an opposite end connected to the second tube (15).

11. Apparatus as claimed in claim 10 characterised in that the pneumatic actuator (22) is mounted inside the first tube.

12. A freight-carrying vehicle fitted with fluid suspension and characterised in that it has platform height stabilising apparatus as claimed in any one of the preceding claims.

## Patentansprüche

1. Ladeflächenhöhenstabilisiervorrichtung für einen Lastwagen mit Fluidaufhängung,
**gekennzeichnet durch**
mindestens eine Strebe (13) veränderlicher Länge, die derart angeordnet werden kann, daß sie zwischen einer Last tragenden Ladefläche und einer Achse des Fahrzeugs oder zwischen der Ladefläche und dem Boden wirksam ist, eine Einrichtung (22, 18, 43) zum Variieren der Länge der Strebe, eine Verriegelungseinrichtung (26, 28, 27, 19, 48) zum Verriegeln der Strebe in einer Abstützposition zwischen der Ladefläche und der Achse/dem Boden, eine der Strebe zugeordnete Totgangverbindung (28, 19), wodurch ein Variieren der auf die Ladefläche einwirkenden Last in der Lage ist, eine Bewegung der Ladefläche unter dem Einfluß der Fluidaufhängung zu veranlassen/zu gestatten, und eine Ventileinrichtung (31, 46) gemeinsam im Kreis mit der Fluidaufhängung und einer Fluiddruckquelle, wobei die Anordnung derart ist, daß die Ventileinrichtung durch die Totgangverbindung betätigt wird, um ein Füllen/Leeren der Aufhängung zu veranlassen, wodurch die Aufhängung veranlaßt wird, auf die Belastung der Ladefläche anzusprechen.

2. Vorrichtung nach Anspruch 1,
**dadurch gekennzeichnet,**
daß die Strebe (13) ein erstes Rohr (14) und ein zweites Rohr (15), das verschieblich jedoch nicht-drehbar in dem ersten Rohr angeordnet ist, aufweist.

3. Vorrichtung nach Anspruch 2,
**dadurch gekennzeichnet,**
daß das zweite Rohr (15) entlang seiner Längserstreckung mehrere ausgerichtete Löcher (19) aufweist, daß von dem ersten Rohr (14) ein Aktuator (26, 48) getragen wird, daß mit dem Aktuator (26, 48) ein Verriegelungszapfen (28) betrieblich verbunden und mit der Reihe von Löchern (19) ausgerichtet ist, wobei die Löcher (19) und der Verriegelungszapfen (28) derart bemessen sind, daß, wenn der Verriegelungszapfen in irgendeines der Löcher eingreift, ein Spiel zwischen dem Verriegelungszapfen und dem Loch in Längsrichtung der Strebe vorhanden ist, und der Aktuator zum Betrieb veranlaßt wird, wodurch der Verriegelungszapfen in ein fluchtendes von den Löchern eingeführt wird, wodurch eine Totgangverbindung entsteht zwischen dem ersten und dem zweiten Rohr, die die Relativbewegung in Längsrichtung der Strebe begrenzt.

4. Vorrichtung nach Anspruch 3,
**dadurch gekennzeichnet,**
daß von dem ersten Rohr (14) eine pneumatische Ventileinrichtung (31, 46) getragen wird, die ansprechend auf die Bewegung der Totgangverbindung (28, 19) arbeitet, um das Füllen/Leeren der Aufhängung des Fahrzeugs zu veranlassen, wodurch die Aufhängung veranlaßt wird, auf die Belastung ihrer Ladefläche anzusprechen, wenn die Strebe (13) in eine Abstützposition zwischen dem Fahrzeug und einer Achse oder dem Boden verriegelt ist.

5. Vorrichtung nach Anspruch 3 oder Anspruch 4,
**dadurch gekennzeichnet,**
daß in einem unteren Ende des ersten Rohres (14) ein Durchgangsloch (27) vorhanden und zu dem unteren Ende hin angeordnet ist, mit welchem die Löcher (19) des zweiten Rohrs (15) jeweils ausrichtbar sind, und daß der Verriegelungszapfen (28) in das Durchgangsloch (27) und in ein fluchtendes der Löcher (19) eingreift, um die Totgangverbindung zu schaffen.

6. Vorrichtung nach Anspruch 5,
**dadurch gekennzeichnet,**
daß das Durchgangsloch (27) derart bemessen ist, daß es den Verriegelungszapfen (28) mit Spiel in Längsrichtung der Strebe (13) aufnimmt, so daß der Verriegelungszapfen (28) in Längsrichtung der Strebe gekippt werden kann, wenn die relative Vertikalbewegung zwischen dem ersten Rohr (14) und dem zweiten Rohr (15) erfolgt.

7. Vorrichtung nach Anspruch 3 oder Anspruch 4,
**dadurch gekennzeichnet,**
daß von dem ersten Rohr (14) ein erster Hebel (45) getragen wird, der Aktuator (48) zwischen dem ersten Rohr (14) und dem Hebel (45) wirkt, daß eine Vorspanneinrichtung (49) den Hebel (45) derart vorspannt, daß dieser mit dem Aktuator (48) in Eingriff tritt, und der Verriegelungszapfen (28) von dem Hebel getragen wird, wodurch eine Betätigung des Aktuators ein Verschwenken des Hebels veranlaßt, um den Verriegelungszapfen in ein fluchtendes der Löcher (19) in dem zweiten Rohr (15) einzuführen.

8. Vorrichtung nach Anspruch 7,
**dadurch gekennzeichnet,**
daß ein Ventil (46) in dem Kreis mit der Fluidverbindung und der Fluiddruckquelle von dem Hebel (45) getragen wird und mit dem zweiten Rohr (15) in Eingriff bringbar ist, um von diesem ansprechend auf eine Bewegung in der Totgangverbindung betätigbar zu sein und eine Bewegung der Ladefläche unter dem Einfluß der Fluidaufhängung zu veranlassen/zu gestatten.

9. Vorrichtung nach einem der vorhergehenden Ansprüche 2 bis 8,
**dadurch gekennzeichnet,**
daß die Einrichtung zum Variieren der Länge der Strebe einen pneumatischen Aktuator (22) aufweist, der betrieblich zwischen das erste und das zweite Rohr (14, 15) gekoppelt ist, um selektiv das zweite Rohr zu veranlassen, in das erste Rohr zurückgezogen zu werden, und dem zweiten Rohr zu ermöglichen, aus dem ersten Rohr auszufahren.

10. Vorrichtung nach Anspruch 9,
**dadurch gekennzeichnet,**
daß der pneumatische Aktuator (22) eine pneumatische Hebevorrichtung mit einem Zylinder (22'), einem Kolben und einer Kolbenstange (23) ist, daß eine erste Seilscheibe (24, 42) drehbar an einem freien Ende der Kolbenstange (23) getragen wird, daß eine zweite Seilscheibe (21, 37) drehbar oben an dem ersten Rohr (14) getragen wird, und daß eine flexible Verbindung (18, 43) an einem Ende mit einer Verankerung koppelbar ist, die im Betrieb der Vorrichtung relativ zu dem Fahrzeug feststeht, und die um die erste und die zweite Seilscheibe geführt ist und mit einem entgegengesetzten Ende an das zweite Rohr (15) gekoppelt ist.

11. Vorrichtung nach Anspruch 10,
**dadurch gekennzeichnet,**
daß der pneumatische Aktuator (22) im Inneren des ersten Rohrs gelagert ist.

12. Lastkraftwagen, ausgestattet mit einer Fluidaufhängung und
**dadurch gekennzeichnet,**
daß er eine Ladeflächenhöhenstabilisiervorrichtung nach einem der vorhergehenden Ansprüche aufweist.

## Revendications

1. Dispositif de stabilisation de hauteur de plate-forme pour un véhicule de transport de marchandises à suspension hydraulique, caractérisé par au moins un étai (13) de longueur variable adapté pour être disposé de manière à agir entre une plate-forme supportant une charge et un axe du véhicule ou entre la plate-forme et le sol, par des moyens (22,18,43) pour faire varier la longueur de l'étai, des moyens de verrouillage (26,28,27,19,48) pour verrouiller l'étai dans une position d'étayage entre la plate-forme et l'axe/sol, une connexion (28,19) à course morte étant associée à l'étai, de sorte qu'une variation de la charge sur la plate-forme est autorisée à permettre/provoquer le mouvement de la plate-forme sous l'influence de la suspension hydraulique, et par des moyens de valve (31,46) en circuit avec la suspension hydraulique et une source de pression hydraulique, l'arrangement étant tel que les moyens de valve sont actionnés par la connexion à course morte pour entraîner le gonflage/dégonflage de la suspension, de sorte que la suspension réagit au chargement de la plate-forme.

2. Dispositif selon la revendication 1, caractérisé en ce que l'étai (13) comporte un premier tube (14) et un second tube (15) qui est coulissant dans le premier tube mais pas mobile en rotation par rapport à lui.

3. Dispositif selon la revendication 2, caractérisé en ce que le second tube (15) comporte le long de sa longueur une pluralité de trous alignés (19), en ce qu'un actionneur (26,48) est porté par le premier tube (14), en ce qu'une goupille de verrouillage (28) est fonctionnellement connectée à l'actionneur (26,48) et alignée avec la ligne de trous (19), les trous (19) et la goupille de verrouillage (28) étant dimensionnés de telle manière que lorsque la goupille de verrouillage est engagée dans l'un quelconque des trous, il existe un jeu entre la goupille de verrouillage et le trou dans une direction longitudinale par rapport à l'étai, et en ce que l'actionneur est mis en oeuvre de telle manière que la goupille de verrouillage est insérée dans un trou correspondant, de sorte qu'une liaison à course morte est réalisée entre le premier et le second tube, limitant leur mouvement relatif dans une direction longitudinale par rapport à l'étai.

4. Dispositif selon la revendication 3, caractérisé en ce que des moyens de valve pneumatique (31,46) sont portés par le premier tube (14) de façon à pouvoir être utilisés en réponse à un mouvement dans la liaison à course morte (28,19) pour entraîner le gonglage/dégonflage de la suspension du véhicule, de sorte que la suspension est amenée à réagir au chargement de sa plate-forme lorsque l'étai (13) est verrouillé dans une position d'étayage entre le véhicule et un axe ou le sol.

5. Dispositif selon la revendication 3 ou la revendication 4, caractérisé en ce qu'il existe un trou traversant (27) dans et en direction d'une extrémité inférieure du premier tube (14) et avec lequel les trous (19) du second tube (15) sont respectivement en correspondance, et en ce que la goupille de verrouillage (28) s'insère dans le trou traversant (27) et un trou correspondant des trous (19) pour réaliser la liaison à course morte.

6. Dispositif selon la revendication 5, caractérisé en ce que le trou traversant (27) est dimensionné pour recevoir la goupille de verrouillage (28) avec un jeu entre eux dans une direction longitudinale par rapport à l'étai (13) de sorte que la goupille de verrouillage (28) peut pivoter longitudinalement par rapport à l'étai lors d'un mouvement relatif vertical entre le premier tube (14) et le second tube (15).

7. Dispositif selon la revendication 3 ou la revendication 4, caractérisé en ce qu'un levier (45) est porté de façon pivotante par le premier tube (14), en ce que l'actionneur (48) agit entre le premier tube (14) et le levier (45), en ce que des moyens de pré-charge (49) pré-chargent le levier (45) pour qu'il coopère avec l'actionneur (48), et en ce que la goupille de verrouillage (28) est portée par le levier, de sorte que le fonctionnement de l'actionneur entraîne le pivotement du levier pour insérer la goupille de verrouillage dans un trou correspondant des trous (19) du second tube (15).

8. Dispositif selon la revendication 7, caractérisé en ce qu'une valve (46) dans le circuit de la suspension hydraulique et la source de pression hydraulique est portée par le levier (45) et est apte à coopérer avec le second tube (15) de façon à pouvoir être actionnée par lui en réponse à un mouvement dans la liaison à course morte, et à entraîner/autoriser le mouvement de la plate-forme sous l'influence de la suspension hydraulique.

9. Dispositif selon l'une quelconque des revendications 2 à 8 précédentes, caractérisé en ce que les moyens pour faire varier la longueur de l'étai comportent un actionneur pneumatique (22) fonctionnellement connecté entre les premier et second tubes (14,15) de façon à provoquer sélectivement le retrait du second tube dans le premier tube et à autoriser l'extension du second tube à partir du premier tube.

10. Dispositif selon la revendication 9, caractérisé en ce que l'actionneur pneumatique (22) est un vérin pneumatique ayant un cylindre (22'), un piston et une tige de piston (23), en ce qu'une première poulie (24,42) est portée mobile en rotation par une extrémité libre de la tige de piston (23), en ce qu'une seconde poulie (21,37) est portée mobile en rotation au sommet du premier tube (14) et en ce qu'un lien de connexion flexible (18,43) est adapté pour être connecté à une extrémité à un ancrage qui lors de l'utilisation du dispositif est fixe par rapport au véhicule, est engagé autour des première et seconde poulies et comporte une extrémité opposée connectée au second tube (15).

11. Dispositif selon la revendication 10, caractérisé en ce que l'actionneur pneumatique (22) est monté à l'intérieur du premier tube.

12. Véhicule de transport de marchandise pourvu d'une suspension hydraulique et caractérisé en ce qu'il comporte un dispositif de stabilisation de hauteur de plate-forme selon l'une quelconque des revendications précédentes.
